# EUROPÄISCHE PATENTANMELDUNG

(11) **EP 2 565 605 A1**
(43) Veröffentlichungstag der Anmeldung: **06.03.2013**
(21) Anmeldenummer: 11179152.1
(22) Anmeldetag: 29.08.2011
(51) Int. Cl.: G01K 1/14, F01D 17/08

(54) **Strömungsmaschine mit einer Temperaturmesseinrichtung in einem Bereich des Rotors**

(71) Anmelder: SIEMENS AKTIENGESELLSCHAFT, 80333 München (DE)
(72) Erfinder: Ahaus, Guido, 45133 Essen (DE); Balkowski, Ingo, 47647 Kerken (DE); Flohr, Patrick Ronald, 45478 Mülheim a.d. Ruhr (DE); Heckel, Waldemar, 45357 Essen (DE); Hoell, Harald, 63607 Wächtersbach (DE); Lyko, Christian, 44627 Herne (DE); Ricken, Oliver, 45149 Essen (DE); Sieber, Uwe, 45476 Mülheim an der Ruhr (DE); Stock, Sebastian, 45479 Mülheim (DE); Veitsman, Vyacheslav, 45879 Gelsenkirchen (DE); Woditschka, Frank, 47229 Duisburg (DE)

(57) **Zusammenfassung**

Eine Strömungsmaschine (101) mit einem Rotor, wobei der Rotor ein zentrales Halteelement (124) und darauf angeordnete Rotorelemente (122) umfasst, soll ein schnelleres Anfahren erlauben, ohne dabei die Lebensdauer des Rotors zu reduzieren, und gleichzeitig bessere Vorhersagen über die verbleibende Lebensdauer des Rotors ermöglichen. Dazu ist in einem Bereich des Rotors zwischen dem Halteelement (124) und dem Rotorelement (122) ein Kontaktelement (126) angeordnet, wobei das Kontaktelement (126) eine Temperaturmesseinrichtung (134) umfasst.

## Beschreibung

Die Erfindung betrifft eine Strömungsmaschine mit einem Rotor, wobei der Rotor ein zentrales Halteelement und darauf angeordnete Rotorelemente umfasst.

Eine Strömungsmaschine ist eine Fluidenergiemaschine, bei der die Energieübertragung zwischen Fluid und Maschine in einem offenen Raum durch eine Strömung nach den Gesetzen der Fluiddynamik über den Umweg der kinetischen Energie erfolgt. Die Energieübertragung erfolgt normalerweise mittels Rotorblättern, Flügeln oder Schaufeln, die derart profiliert sind, dass durch die Umströmung eine Druckdifferenz zwischen Vorder- und Rückseite entsteht (Tragflächenprofil). Eine Strömungsmaschine besteht typischerweise aus einem rotierenden Teil, dem Rotor, und einem statischen Teil, dem Stator.

Eine Gasturbine ist eine Strömungsmaschine, in der ein unter Druck stehendes Gas expandiert. Sie besteht aus einer Turbine oder Expander, einem vorgeschalteten Verdichter und einer dazwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt. Außerdem wird die Luft zur Kühlung insbesondere thermisch stark beanspruchter Bauteile eingesetzt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Der Rotor einer Strömungsmaschine ist insbesondere bei Gasturbinen ein thermisch und mechanisch hoch beanspruchtes Bauteil. Er besteht üblicherweise aus einem zentralen Halteelement, einer Welle oder Achse, an dem die übrigen Rotorelemente wie Scheiben und Laufschaufeln befestigt sind. Insbesondere beim Kaltstart der Strömungsmaschine werden die Rotorscheiben dabei sehr stark beansprucht. Einerseits werden die Rotoren im Bereich der Schaufelfüße stark erwärmt, andererseits wird der Rotor von Kühlluft durchströmt, damit die Materialtemperatur nicht die Festigkeitsgrenzen überschreitet.

Die sich im Inneren des Rotors einstellenden Strömungsstrukturen und Wärmeübergangseffekte sind äußerst komplex und seit Jahrzehnten weltweit Gegenstand der universitären Forschung. Dies gilt erst recht für die transienten Vorgänge beim An- und Abfahren der Maschinen.

Die im Rotor auftretenden Temperaturen und insbesondere die Temperaturgradienten, die zu Thermospannungen führen, werden in der Praxis zurzeit konservativ, d. h. eher zur sicheren Seite hin abgeschätzt. Hierbei kommt häufig die FEM (Finite-Elemente-Methode) zu Anwendung, ein numerisches Verfahren zur Lösung von partiellen Differentialgleichungen, mit dem Festkörpersimulationen durchgeführt werden können. Die Randbedingungen werden hier anhand einzelner Prototypenmessungen bestimmt. Hier werden teilweise auch Stichprobenmessungen der Temperatur einzelner Rotorkomponenten durchgeführt.

Die so gewonnenen Daten werden genutzt, um einerseits die maximale Anzahl an Startzyklen abzuschätzen, die ein Rotor übersteht, bevor er ausgetauscht werden muss, und um andererseits eine in einigen Fällen notwendige Vorheizzeit des Rotors abzuschätzen, die erforderlich ist, um Thermospannungen auf ein erträgliches Maß zu reduzieren und die Anzahl an erlaubten Startzyklen hoch genug zu halten.

Allerdings bedeutet ein Abwarten einer bestimmten Zeit vor der Inbetriebnahme Rotors stets einen erhöhten Energieverbrauch und eine längere Anlaufzeit der Strömungsmaschine, was gerade z. B. bei Gas- und Dampfturbinenkraftwerken unerwünscht ist, da diese oft kurzfristige Leistungsspitzenanforderungen des Stromnetzes decken müssen.

Aufgabe der Erfindung ist es daher, eine Strömungsmaschine anzugeben, welche ein schnelleres Anfahren erlaubt, ohne dabei die Lebensdauer des Rotors zu reduzieren, und gleichzeitig bessere Vorhersagen über die verbleibende Lebensdauer des Rotors ermöglicht.

Diese Aufgabe wird erfindungsgemäß gelöst, indem in einem Bereich des Rotors zwischen dem Halteelement und dem Rotorelement ein Kontaktelement angeordnet ist, wobei das Kontaktelement eine Temperaturmesseinrichtung umfasst.

Die Erfindung geht dabei von der Überlegung aus, dass ein schnelleres Anfahren und eine bessere Abschätzung der Lebensdauer insbesondere dadurch möglich wären, dass besonders genaue und aktuelle Daten zum Temperaturverhalten des Rotors zur Verfügung gestellt werden. Hierzu können beispielsweise basierend auf der Anpassung an transiente Temperaturverläufe aus FEM-Modellen analytische Temperaturformeln abgeleitet werden, mit Hilfe derer die Materialtemperatur anhand erfasster Betriebsdaten abgeschätzt werden kann. Eine derartige Abschätzung muss jedoch hinsichtlich der Betriebssicherheit und Lebensdauer stets konservativ ausfallen. Dies kann z. B. dazu führen, dass beim Anfahren das Abwarten der entsprechenden Temperaturverhältnisse unnötig lange dauert oder sogar der Startvorgang der Strömungsmaschine verriegelt wird, obwohl die erforderliche Materialtemperatur erreicht ist, aber durch die Temperaturformel als zu niedrig abgeschätzt wird.

Daher sollte die Genauigkeit der Temperaturbestimmung weiter verbessert werden. Dies ist erreichbar, indem die Temperatur in dem interessierenden Bereich des Rotors direkt gemessen wird. Allerdings ist hierbei problematisch, dass einige Bereiche des Rotors, insbesondere die besonders thermisch belasteten Scheibennaben, im Inneren der Strömungsmaschine angeordnet und daher schwer zugänglich sind. Daher sollte eine Möglichkeit gefunden werden, die Materialtemperatur durch eine entsprechend geschickte Anordnung einer Temperaturmesseinrichtung zu messen. Dies ist erreichbar, indem die Temperaturmesseinrichtung in einem Kontaktelement zwischen dem zu messenden Rotorelement und dem Halteelement des Rotors angeordnet ist. Diese kann mithilfe von Temperaturumformern wie z. B. Widerstandssensoren oder Thermoelementen gestaltet sein. Durch die Fliehkraft bei der Rotation des Rotors wird das Kontaktelement dann gegen das Halteelement gedrückt und es ist somit ein guter Kontakt und eine gute Wärmeübertragung gewährleistet.

Vorteilhafterweise ist der Bereich des Rotors der im Vergleich zu anderen Bereichen der thermisch am höchsten belastete Bereich. Nicht alle Bereiche des Rotors der Strömungsmaschine sind nämlich im Betrieb gleich hoch belastet. So sind z. B. die Scheiben-Naben des Rotors vergleichsweise hoch belastete Teile. Um keine Temperaturmessung in sämtlichen Bereichen durchführen zu müssen, sollte sichergestellt werden, dass in jedem Fall die hoch belasteten Bereiche, die für die Lebensdauerberechnung kritisch sind, genau gemessen werden. So wird bei reduziertem Aufwand die Lebensdauerbestimmung des Rotors verbessert.

Vorteilhafterweise ist das zentrale Rotorelement ein Zuganker und/oder das Rotorelement eine Rotorscheibe, d. h. das Kontaktelement befindet sich zwischen Zuganker und den darauf aufgebrachten Rotorscheiben. Kontaktelemente sind so an sämtlichen Scheiben über die gesamte axiale Länge anbringbar und somit deren Temperatur erfassbar. Gleichzeitig bedeutet dies eine besonders hohe Stabilität und einfache Konstruktion des Rotors.

In weiterer vorteilhafter Ausgestaltung ist das das Kontaktelement drehbar auf einer Achse gelagert, wobei die Achse an dem zentralen Halteelement befestigt ist. Das heißt, das Kontaktelement ist in der Art einer Klinke ausgestaltet, die am zentralen Halteelement, insbesondere dem Zuganker befestigt ist. Durch die drehbar gelagerte Achse bewegt sich diese Klinke an der der Achse abgewandten Seite unter dem Einfluss der Zentrifugalkraft nach außen und verkeilt das umliegende Rotorbauteil, insbesondere die Rotorscheibe. Damit wird die Klinke in der Art einer Doppelnutzung einerseits für die Befestigung und zentralsymmetrische Fixierung der Rotorscheibe, andererseits in der Kette der Signalübertragung der Scheibentemperatur auf die Klinkentemperatur, Datenübertragung und Überwachung genutzt. Gegebenenfalls ist auch eine weitere Nutzung der Klinken zur Schwingungsdämpfung im Rotor möglich. Vorteilhaft ist hier eine Ausführung der Klinke derart, dass sie bereits bei der Turndrehzahl, d. h. beim Anfahren der Strömungsmaschine, unter ausreichender Kraft an der Scheibe anliegt und bei Betriebsdrehzahl eine Relativdehnung der Rotorkomponenten zulässt.

Vorteilhafterweise umfasst das Kontaktelement auf seiner dem Rotorelement zugewandten Seite ein wärmeleitendes Material. Dadurch wird ein besonders guter Wärmeübergang von dem zu messenden Bereich an der Rotorscheibe zur Temperaturmesseinrichtung gewährleistet und damit die Qualität der Temperaturbestimmung verbessert.

In weiterer vorteilhafter Ausgestaltung umfasst das Kontaktelement auf seiner dem zentralen Halteelement zugewandten Seite ein Isoliermaterial. Damit wird ein Wärmeeintrag bzw. Wärmeabfluss in Richtung des zentralen Zugankers verhindert. Auch die verbessert die Qualität der Temperaturbestimmung. Vorteilhafterweise umfasst das zentrale Halteelement im Bereich eines ihm zugeordneten Lagers einen mit der Temperaturmesseinrichtung datenseitig verbundenen Transmitter zur Übertragung der Temperaturdaten. Die Datenleitung von der Temperaturmesseinrichtung verläuft somit auf oder im zentralen Halteelement, z. B. dem Zuganker bis zum Lager, das typischerweise in einem Außenbereich angeordnet ist. Der Transmitter kann beispielsweise nach dem induktiven Prinzip oder mittels Schleifkontakten ausgebildet sein und ermöglicht so eine Signalübertragung zu den stationären Komponenten. Eine derartige Ausführung lässt sich für lange Betriebszeiten ertüchtigen. Die Positionierung des Transmitters an einem Lager ermöglicht wegen der guten Erreichbarkeit auch eine Wartung ohne Demontage des Rotors.

In vorteilhafter Ausgestaltung sind eine Mehrzahl von Kontaktelementen symmetrisch um das zentrale Halteelement angeordnet. Dadurch werden Unwuchten vermieden und es wird über den gesamten Umfang eine Temperaturmessung ermöglicht.

Vorteilhafterweise ist die Strömungsmaschine eine Gasturbine. Gerade in Gasturbinen, die die vergleichsweise höchsten thermischen und mechanischen Belastungen an ihren Bauteilen, insbesondere dem Rotor aufweisen, ist die beschriebene Ausgestaltung von erheblichem Vorteil hinsichtlich der Lebensdauerbestimmung und verkürzt die Anfahrzeit ohne Einbußen hinsichtlich der Betriebssicherheit oder Lebensdauer.

Eine derartige Strömungsmaschine kommt vorteilhafterweise in einem Kraftwerk zum Einsatz.

Die mit der Erfindung erzielten Vorteile bestehen insbesondere darin, dass durch die Messung über die gesamte Lebensdauer der Strömungsmaschine aktuelle Daten zum Temperaturverhalten des Rotors zur Verfügung stehen. Mit Hilfe dieser Daten können wesentlich genauere Lebensdauerabschätzungen für Rotoren gemacht werden und die Anzahl der zu erlaubenden Starts entsprechend physikalischer Gegebenheiten aktuell angepasst werden. Dies ist insbesondere bei Anlagen mit häufigen Kaltstarts ein unmittelbarer wirtschaftlicher Vorteil für den Betreiber. Gleichzeitig wird durch eine kontinuierliche Temperaturmessung eine bessere Abschätzung der Rotorlebensdauer und eine Verkürzung des Anfahrprozesses ohne Reduzierung der Lebensdauer ermöglicht. Neben der Zeitersparnis und damit höheren Flexibilität wird dabei auch weniger Energie beim Anfahren verbraucht. Die direkte Messung der Temperatur in Verbindung mit der Signalleitung in den Bereich der Lager stellt weiterhin ein besonders wartungsfreundliches System zur kontinuierlichen Temperaturmessung dar.

Die Erfindung wird anhand einer Zeichnung näher erläutert. Darin zeigen:
- FIG 1: einen axialen Schnitt durch eine Gasturbine,
- FIG 2: einen axialen Schnitt durch einen Teilbereich des Rotors der Gasturbine aus FIG 1, und
- FIG 3: einen radialen Schnitt durch ein Kontaktelement der Gasturbine.

Gleiche Teile sind in allen FIGs mit denselben Bezugszeichen versehen.

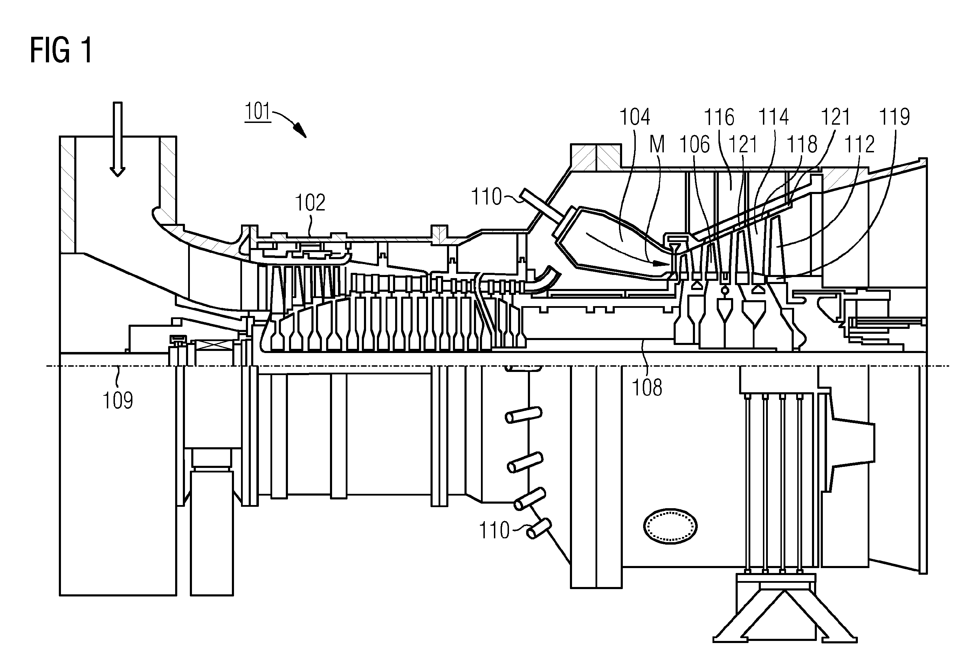

Eine Gasturbine 101, wie in FIG 1 dargestellt, ist eine Strömungsmaschine. Sie weist einen Verdichter 102 für Verbrennungsluft, eine Brennkammer 104 sowie eine Turbineneinheit 106 zum Antrieb des Verdichters 102 und eines nicht dargestellten Generators oder einer Arbeitsmaschine auf. Dazu sind die Turbineneinheit 106 und der Verdichter 102 auf einer gemeinsamen, auch als Turbinenläufer bezeichneten Turbinenwelle 108 angeordnet, mit der auch der Generator bzw. die Arbeitsmaschine verbunden ist, und die um ihre Mittelachse 109 drehbar gelagert ist. Diese Einheiten bilden den Rotor der Gasturbine 101. Die in der Art einer Ringbrennkammer ausgeführte Brennkammer 104 ist mit einer Anzahl von Brennern 110 zur Verbrennung eines flüssigen oder gasförmigen Brennstoffs bestückt.

Die Turbineneinheit 106 weist eine Anzahl von mit der Turbinenwelle 108 verbundenen, rotierbaren Laufschaufeln 112 auf. Die Laufschaufeln 112 sind kranzförmig an der Turbinenwelle 108 angeordnet und bilden somit eine Anzahl von Laufschaufelkränzen oder -reihen. Weiterhin umfasst die Turbineneinheit 106 eine Anzahl von feststehenden Leitschaufeln 114, die ebenfalls kranzförmig unter der Bildung von Leitschaufelreihen an einem Leitschaufelträger 116 der Turbineneinheit 106 befestigt sind. Die Laufschaufeln 112 dienen dabei zum Antrieb der Turbinenwelle 108 durch Impulsübertrag vom die Turbineneinheit 106 durchströmenden Arbeitsmedium M. Die Leitschaufeln 114 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 114 oder einer Leitschaufelreihe und aus einem Kranz von Laufschaufeln 112 oder einer Laufschaufelreihe wird dabei auch als Turbinenstufe bezeichnet.

Jede Leitschaufel 114 weist eine Plattform 118 auf, die zur Fixierung der jeweiligen Leitschaufel 114 an einem Leitschaufelträger 116 der Turbineneinheit 106 als Wandelement angeordnet ist. Die Plattform 118 ist dabei ein thermisch vergleichsweise stark belastetes Bauteil, das die äußere Begrenzung eines Heißgaskanals für das die Turbineneinheit 106 durchströmende Arbeitsmedium M bildet. Jede Laufschaufel 112 ist in analoger Weise über eine auch als Schaufelfuß bezeichnete Plattform 119 an der Turbinenwelle 108 befestigt.

Zwischen den beabstandet voneinander angeordneten Plattformen 118 der Leitschaufeln 114 zweier benachbarter Leitschaufelreihen ist jeweils ein Ringsegment 121 an einem Leitschaufelträger 1 der Turbineneinheit 106 angeordnet. Die äußere Oberfläche jedes Ringsegments 121 ist dabei ebenfalls dem heißen, die Turbineneinheit 106 durchströmenden Arbeitsmedium M ausgesetzt und in radialer Richtung vom äußeren Ende der ihm gegenüber liegenden Laufschaufeln 112 durch einen Spalt beabstandet. Die zwischen benachbarten Leitschaufelreihen angeordneten Ringsegmente 121 dienen dabei insbesondere als Abdeckelemente, die das Innengehäuse im Leitschaufelträger 116 oder andere Gehäuse-Einbauteile vor einer thermischen Überbeanspruchung durch das die Turbine 106 durchströmende heiße Arbeitsmedium M schützen.

Die Brennkammer 104 ist im Ausführungsbeispiel als so genannte Ringbrennkammer ausgestaltet, bei der eine Vielzahl von in Umfangsrichtung um die Turbinenwelle 108 herum angeordneten Brennern 110 in einen gemeinsamen Brennkammerraum münden. Dazu ist die Brennkammer 104 in ihrer Gesamtheit als ringförmige Struktur ausgestaltet, die um die Turbinenwelle 108 herum positioniert ist.

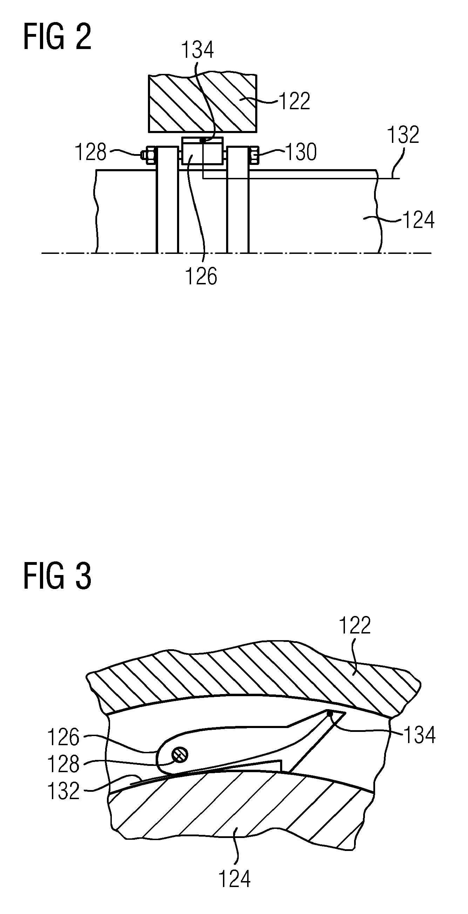

Um nun eine bessere Vorhersage über die Lebensdauer des Rotors und die notwendigen eventuellen Vorheizzeiten zu ermöglichen, ist die Gasturbine 101 für eine Temperaturmessung im Rotor ausgelegt. Dies ist in FIG 2 gezeigt, die einen vergrößerten Schnitt durch den Rotor der Gasturbine 101 darstellt.

Gezeigt ist hier der detailliertere Aufbau des Rotors im axialen Schnitt: Die bereits beschriebenen Laufschaufeln 114 der Turbineneinheit 106 sind mit den Plattformen 119 pro Laufschaufelreihe jeweils an einer Rotorscheibe 122 befestigt. Die Rotorscheiben 122 sind auf einem Zuganker 124 befestigt. Im thermisch vergleichsweise am höchsten belasteten Bereich ist eine Klinke 126 angeordnet, die drehbar auf einer Achse 128 mittels Muttern 130 befestigt ist. Eine Datenleitung 132 führt zu einer Temperaturmesseinrichtung 134 in der Klinke 126.

FIG 3 zeigt einen radialen Schnitt durch den Rotor, wobei das Profil der Klink 126 erkennbar ist. Die Temperaturmesseinrichtung 134 ist im der Rotorscheibe 122 zugewandten Bereich angeordnet. Darüber ist ein thermisch gut leitendes Material aufgebracht, darunter ein Isolator. Die Datenleitung 132 führt von der Temperaturmesseinrichtung 134 zu einem nicht gezeigten Lager des Rotors, wo sie in einen Transmitter führt, der die Temperaturdaten auf stationäre Bauteile übermittelt.

Bei einer Rotation des Zugankers 124 mit dem Rotor wird die Klinke 126 gegen die Rotorscheibe 122 gedrückt, so dass ein guter Wärmeübergang zur Temperaturmesseinrichtung 134 besteht. Die Klinke 126 erfüllt somit eine Mehrfachfunktion: Einerseits fixiert sie die Rotorscheibe und sorgt für einen radialen Ausgleich, andererseits dient sie als Übertragungsglied in der Temperaturmessung. Zusätzlich dient die Klinke 126 der Dämpfung von Schwingungen.

Durch die Temperaturmessung wird einerseits die Anfahrzeit der Gasturbine 101 reduziert. Andererseits stehen Temperaturdaten des Rotors zur Verfügung, was besonders genaue Vorhersagen hinsichtlich der Lebensdauer der Gasturbine 101 ermöglicht.

## Patentansprüche

1. Strömungsmaschine (101) mit einem Rotor,
wobei der Rotor ein zentrales Halteelement (124) und darauf angeordnete Rotorelemente (122) umfasst,
wobei in einem Bereich des Rotors zwischen dem Halteelement (124) und dem Rotorelement (122) ein Kontaktelement (126) angeordnet ist,
wobei das Kontaktelement (126) eine Temperaturmesseinrichtung (134) umfasst.

2. Strömungsmaschine (101) nach Anspruch 1,
bei der der Bereich des Rotors der im Vergleich zu anderen Bereichen thermisch am höchsten belastete Bereich ist.

3. Strömungsmaschine (101) nach einem der vorhergehenden Ansprüche,
bei der das zentrale Halteelement (124) ein Zuganker (124) und/oder das Rotorelement (122) eine Rotorscheibe (122) ist.

4. Strömungsmaschine (101) nach einem der vorhergehenden Ansprüche,
bei der das Kontaktelement (126) drehbar auf einer Achse gelagert ist,
wobei die Achse an dem zentralen Halteelement (124) befestigt ist.

5. Strömungsmaschine (101) nach einem der vorhergehenden Ansprüche,
bei dem das Kontaktelement (126) auf seiner dem Rotorelement (122) zugewandten Seite ein wärmeleitendes Material umfasst.

6. Strömungsmaschine (101) nach einem der vorhergehenden Ansprüche,
bei der das Kontaktelement (126) auf seiner dem zentralen Halteelement (124) zugewandten Seite ein Isoliermaterial umfasst.

7. Strömungsmaschine (101) nach einem der vorhergehenden Ansprüche,
bei dem das zentrale Halteelement (124) im Bereich eines ihm zugeordneten Lagers einen mit der Temperaturmesseinrichtung (134) datenseitig verbundenen Transmitter zur Übertragung der Temperaturdaten umfasst.

8. Strömungsmaschine (101) nach einem der vorhergehenden Ansprüche,
bei dem eine Mehrzahl von Kontaktelementen (126) symmetrisch um das zentrale Halteelement (124) angeordnet sind.

9. Strömungsmaschine (101) nach einem der vorhergehenden Ansprüche,
die als Gasturbine (101) ausgelegt ist.

10. Kraftwerk mit einer Strömungsmaschine (101) nach einem der vorhergehenden Ansprüche.
